# EUROPEAN PATENT APPLICATION

(11) **EP 1 752 903 A2**
(43) Date of publication of application: **14.02.2007**
(21) Application number: 06014357.5
(22) Date of filing: 11.07.2006
(51) Int. Cl.: G06F 21/02, G06F 21/20, G06F 21/00, G06F 3/033

(54) **Secure portable memory mouse device**

(30) Priority: 18.07.2005 US 183501
(71) Applicant: Avago Technologies General IP (Singapore) Pte. Ltd, Singapore 768923 (SG)
(72) Inventor: Seaward, Karen L., 94306 Palo Alto (US); Depue, Marshall Thomas, San Jose CA 95126 (US); Xie, Tong, San Jose CA 95121 (US)
(74) Representative: Schoppe, Fritz

(57) **Abstract**

A secure portable mouse memory device for use with a processor unit. The device includes a mouse having an encryption processor in communication with the processor unit, a memory and an encryption key. The memory has an unlock mode in which the memory is operable to communicate with the processor unit and has a lock mode in which the memory is not operable to communicate with the processor unit. The encryption processor locks the memory in the unlock mode when the encryption processor matches a received unlock code with the encryption key.

## Description

### BACKGROUND OF THE INVENTION

Computers include ports for user interfaces, such as graphical user interface ports for mice and ports for memory devices. The ports are designed to accept connectors operable according to standards such as Universal Serial Bus (USB) and FireWire2. Small portable memory devices, such as jump drives and memory sticks, are used to interface with computers to easily transfer data among computers.

The recent availability of portable memory devices has changed the way in which speakers at conferences and meetings present their slides. Speakers download their presentations from a memory device into a single laptop set up in the conference room to project the presentation. Each speaker then presents their respective talk while controlling the slides and, in some cases, the cursor from the laptop. As a replacement for a mouse, the laptops typically include touch pads and/or nubs to control the cursor. The touch pads and nubs are often awkward to maneuver for those people more familiar with the mouse-control of a cursor.

The portable memory devices are useful to lighten the load carried by the speaker, since her or she does not have to carry a laptop to make a presentation. However, the data on the portable memory devices is not secure. If the user of the portable memory device loses the device, a person who finds the portable memory device can download the data from the portable memory device to their computer. This is undesirable, since often the information on the portable memory device is confidential. Some portable memory devices are software protected but if the user wants to use the portable memory device on more than one personal computer, the password must also reside on the portable memory device. If the password is on the portable memory device, the device can be hacked for the password and is not completely secure.

Miniature mice are available to connect to laptops to replace the functionality of the finger pads or nubs. A speaker can bring a miniature mouse, such as, the IBM PS/2 Miniature Mouse Pointing Device or the IOGEAR Mini Mouse 800 model GME222, to the presentation. When the speaker is ready to present, he or she plugs the miniature mouse into the presentation laptop in order to control the cursor during a presentation. Alternatively, a speaker can use a wireless mouse, such as the Kensington 72117 Pocket Mouse. In either of these cases, the speaker must bring the mouse and the memory device to the presentation. Traveling with the mouse and the memory device can be awkward. The mice are fragile and can be damaged if carried in a pocket, a purse, or a briefcase. The memory device is small and can be difficult to locate in a briefcase or a purse.

It is desirable to find a simple system to provide a secure memory device that is easy to transport. It is further desirable to find a simple system to carry a mouse and a secure memory device, which also prevents damage to the mouse and/or the secure memory device.

### SUMMARY OF THE INVENTION

The invention provides in a first aspect a secure portable mouse memory device for use with a processor unit. The device includes a mouse having an encryption processor in communication with the processor unit, a memory and an encryption key. The memory has an unlock mode in which the memory is operable to communicate with the processor unit and has a lock mode in which the memory is not operable to communicate with the processor unit. The encryption processor locks the memory in the unlock mode when the encryption processor matches a received unlock code with the encryption key.

The invention provides in a second aspect a secure portable mouse memory system for use with a processor unit. The secure portable mouse memory system includes a mouse having a housing portion and an encryption processor located in the housing portion. The encryption processor is in communication with the processor unit and is operable to receive a locking code from a user of the processor unit. The secure portable mouse memory system also includes a memory located in the housing portion and an encryption key stored in the housing portion. The memory has a locking mode and the encryption processor sets the locking mode of the memory in an unlock mode when the encryption processor matches a received locking code with the encryption key.

The invention provides in a third aspect a portable mouse memory system including means for determining a match between an encryption key and a received locking code, means for setting a locking mode for a memory in a mouse having a memory, and means for transmitting data between the memory and a processor unit based on the setting of the locking mode.

The above and other features and advantages of the invention will become further apparent from the following detailed description of the presently preferred embodiments, read in conjunction with the accompanying drawings. The detailed description and drawings are merely illustrative of the invention, rather than limiting the scope of the invention being defined by the appended claims and equivalents thereof.

### BRIEF DESCRIPTION OF THE ORA WINGS

The present invention is illustrated by way of example and not limitation in the accompanying figures, in which like reference numbers indicate like elements, and in which:
FIG. 1 is a top cross-sectional view of a secure portable mouse memory device in accordance with a first embodiment of the invention;
FIG. 2 is a top view of the secure portable mouse memory device in communication with a processor unit in accordance with the first embodiment of the invention;
FIG. 3 is a view of the secure portable mouse memory device in necklace form in accordance with the first embodiment of the invention;
FIG. 4 is a top cross-sectional view of a secure portable mouse memory device in communication with a processor unit in accordance with a second embodiment of the invention;
FIG. 5 is a top view of the secure portable mouse memory device in communication with a processor unit in accordance with a third embodiment of the invention;
FIG. 6 is a top cross-sectional view of a secure portable mouse memory device in accordance with a fourth embodiment of the invention;
FIG. 7 is a top cross-sectional view of the secure portable mouse memory device in communication with a processor unit, in accordance with a fifth embodiment of the invention;
FIG. 8 is an enlarged side cross-sectional view of the spooling device of FIG. 7 in the retracted position;
FIG. 9 is a top view of the secure portable mouse memory device in accordance with the fifth embodiment of the invention;
FIG. 10 is a top view of the secure portable mouse memory device formed as a necklace in accordance with the fifth embodiment of the invention;
FIG. 11 is a top cross-sectional view of the secure portable mouse memory device in accordance with a sixth embodiment of the invention;
FIG. 12 is a top view of a secure portable mouse memory device in accordance with a seventh embodiment of the invention;
FIG. 13 is a top cross-sectional view of the secure portable mouse memory device in communication with a processor unit in accordance with the seventh embodiment of the invention;
FIG. 14 is a top view of the secure portable mouse memory device in communication with a processor unit in accordance with an eighth embodiment of the invention;
FIG. 15 is an enlarged side cross-sectional view of the spooling device in accordance with a ninth embodiment of the invention;
FIG. 16 is a top cross-sectional view of the spooling device in accordance with the ninth embodiment of the invention;
FIG. 17 is a top view of the secure portable mouse memory device in communication with a processor unit in accordance with the ninth embodiment of the invention; and
FIG. 18 is a top cross-sectional view of the secure portable mouse memory device in accordance with a tenth embodiment of the invention.

### DETAILED DESCRIPTION

In the following description, several well-known features of computer systems and mice operable as graphical user interfaces with computer systems are not shown or described so as not to obscure the present invention. Presented herein are several embodiments of a mouse with a secure memory in which a connection can be established between the mouse and a processor unit only if the owner of the mouse is identified by the mouse. The established connection is operable to transmit data between the mouse and the processor unit. When the connection is not established, the mouse, a mouse cord and a connector at the end of the mouse cord are operable to form a necklace. The necklace can be draped about the neck of a user to secure or attach the mouse to a user. The necklace is formed when the connector at one end of the mouse cord is inserted into a receptor port in a housing portion of the mouse.

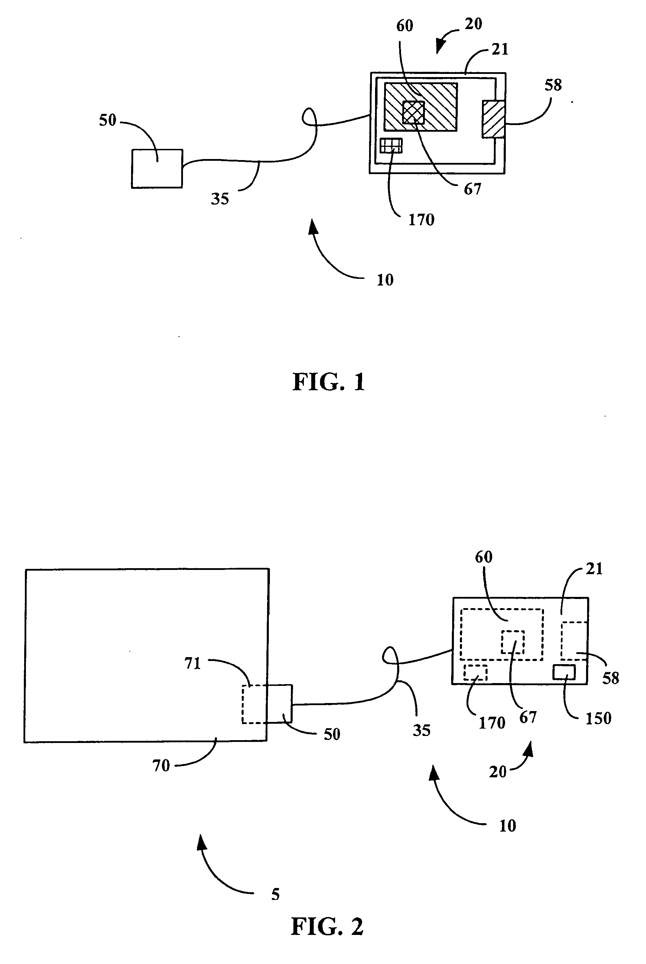

FIG. 1 is a top cross-sectional view of a secure portable mouse memory device 10 in accordance with a first embodiment of the invention. The secure portable mouse memory device 10 includes a mouse 20 having a housing portion 21, which encloses a memory 60 and an encryption processor 170. The secure portable mouse memory device 10 includes encryption key 67 in the memory 60 that unlocks the memory 60. One end of a mouse cord 35 is attached to the mouse 20 and a second end of the mouse cord 35 is attached to a processor connector end 50. A receptor port 58 is formed in the housing portion 21 of the mouse 20 and the processor connector end 50 is insertable into the receptor port 58. As known in the art, a latching mechanism is integral to the processor connector end 50 to maintain the position of the processor connector end 50 in the receptor port 58 until it is unlatched.

FIG. 2 is a top view of the secure portable mouse memory device 10 in communication with a processor unit 70 in accordance with the first embodiment of the invention. The processor unit 70 has a processor receptor port 71 and the processor connector end 50 is insertable into the processor receptor port 71. The latching mechanism of the processor connector end 50 maintains the position of the processor connector end 50 in the processor receptor port 71 until it is unlatched.

A secure portable mouse memory system 5 includes the secure portable mouse memory device 10 in communication with the processor unit 70. The encryption processor 170 is in communication with the processor unit 70 and is operable to receive a locking code from a user of the processor unit 70. The locking code from the user is either an unlock code or a lock code. The memory 60 is operable to interface with the encryption processor 170. The memory 60 has a locking mode which is either a lock mode or an unlock mode. The encryption processor 170 sets the locking mode of the memory 60 in an unlock mode when the encryption processor 170 matches a received locking code with the encryption key 67. In this case, the received locking code is considered to be an unlock code.

If the encryption key 67 does not match the received locking code, the encryption processor 170 processor sets or maintains the locking mode of the memory 60 in a lock mode. In this case, the received locking code is considered to be a lock code.

Specifically in this configuration, when the processor connector end 50 is inserted into the processor receptor port 71, the encryption processor 170 prompts the user of the processor unit 70 via the mouse cord 35 for a locking code. The user enters the locking code, which is transmitted from the processor unit 70 to the memory 60 in the secure portable mouse memory device 10 via the mouse cord 35 and conductive trace lines (not shown) in the housing portion 21. The encryption processor 170 in the secure portable mouse memory device 10 receives the locking code from the user and compares the received locking code to the encryption key 67 in the memory 60. If the encryption processor 170 determines a match, the encryption processor 170 unlocks the memory 60 to put the memory in the unlock mode. In the unlock mode, the memory 60 is operable to communicate with the processor unit 70 via the mouse cord 35. If the encryption processor 170 does not determine a match between the encryption key 67 and the received locking code, the memory 60 remains in the locked mode. In the locked mode, data in the memory 60 is not communicated to the processor unit 70. The connection is additionally operable to transmit cursor control signals from the mouse 20 to the processor unit 70. The memory can be a Not-And (NAND) flash memory, a Not-Or (NOR) flash memory, Ferro-magnetic random access memory (FeRAM).

Broken lines 60, 67 and 58 represent the extent of the memory 60, the encryption key 67 and receptor port 58 projected onto the top of the housing portion 21. Broken lines 71 represent the extent of processor receptor port 71 projected onto the top of the processor unit 70.

In one embodiment, the processor receptor port 71 is a Universal Serial Bus (USB) port according the USB standards and the processor connector end 50 is a connector according the USB standards to enable the electrical communication between the memory 60 and the processor unit 70. In another embodiment, the processor receptor port 71 is a FireWire port according the FireWire standards and the processor connector end 50 is a connector according the FireWire standards to enable the electrical communication between the memory 60 and the processor unit 70. In yet another embodiment, the encryption processor 170 is part of the memory 60. In yet another embodiment, the encryption key 67 is external to memory 60. In yet another embodiment, encryption key 67 is stored in the encryption processor 170.

In yet another embodiment, the security function of the encryption processor 170 and the encryption key 67 is a biometric identifier, which identifies the user. In this case, the mouse 20 includes a biometric sensor 150 (FIG.2) on an outer surface of the housing portion 21. The user of the secure portable mouse memory device 10 provides input to the biometric sensor 150, which generates biometric data. The encryption processor 170 receives the biometric data from the biometric sensor 150 and matches the received biometric data with the encryption key 67. In one embodiment, the encryption key 67 is a fingerprint of the user and biometric sensor 150 is a fingerprint scanner. In another embodiment, the encryption key 67 is an iris scan of the user and the biometric sensor 150 is an iris scanner.

The processor unit 70 can be a computer, a portable communication device, a laptop computer, a personal digital assistant, a cell phone, a music player, such as an MP3 player, a digital camera device, a video recording device, and combinations thereof. The mouse 20 can be an optical mouse consisting of either an LED or a laser light source, or a mechanical mouse comprising a trackball. The mouse 20 can be a large-size mouse, a miniature mouse, and an intermediate-size mouse. A large size mouse has a length from front to back in the range of about 15 cm to about 10 cm. An intermediate size mouse has a length from front to back in the range of about 10 cm to about 5 cm. A miniature mouse has a length from front to back in the range of about 5 cm to about 1 cm. Mice having lengths in the regions of overlap can be defined as being in of mixed-size, for example a 10 cm mouse can be identified as a medium-large mouse.

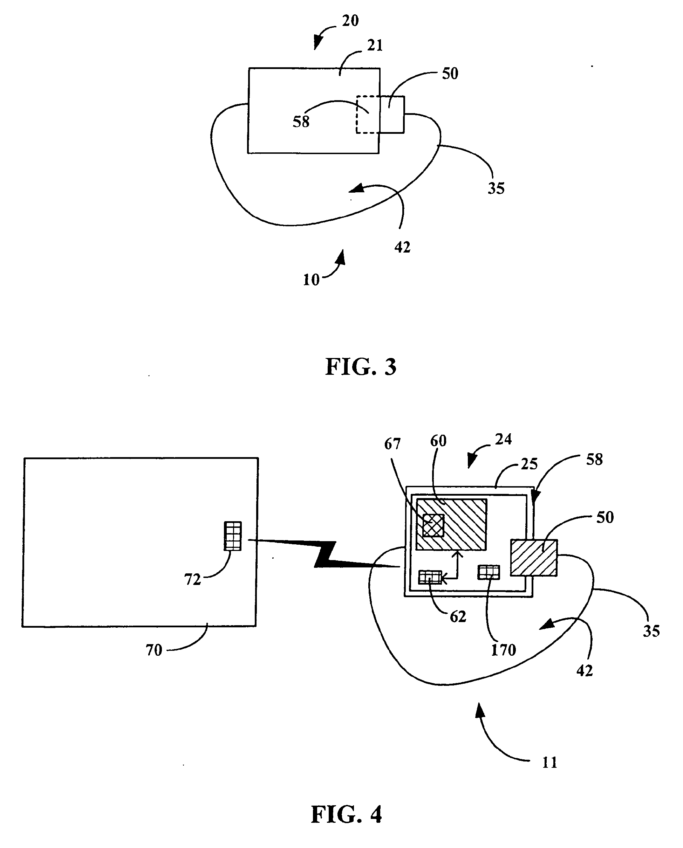

FIG. 3 is a view of the secure portable mouse memory device 10 in the form of a necklace 42 in accordance with the first embodiment of the invention. The mouse cord 35 has a length to allow the secure portable mouse memory device 10 to form a necklace 42 when the processor connector end 50 is attached to the receptor port 58. In one embodiment, a connector end is fixedly attached to a receptor port by plugging a connector into a port.

In one embodiment, a receiving clip (not shown) on a surface of the secure portable mouse memory device 10 replaces the receptor port 58. The processor connector end 50 snaps into the receiving clip to fixedly attach the secure portable mouse memory device 10 to the processor connector end 50 in the form of a necklace 42. Other fixing attachments are possible including one or more of a hasp, mating snaps, mating Velcro®, and compatible sticky tape on the secure portable mouse memory device 10 and the processor connector end 50. In yet another embodiment, a clip (not shown) located on the housing portion 21 attaches to an article of clothing worn by the user when the mouse memory device 10 is formed as a necklace 42. In yet another embodiment, a key-chain ring (not shown) located on the housing portion 21 attaches to a key chain of the user when the mouse memory device 10 is formed as a necklace 42.

In yet another embodiment, a receiving groove (not shown) on a surface of the secure portable mouse memory device 10 replaces the receptor port 58 and a structure (not shown) to mate with the receiving groove is formed on the processor connector end 50. In this case, the mating structure slides into the receiving groove in the secure portable mouse memory device 11 to fixedly attach the secure portable mouse memory device 10 to the processor connector end 50 in the form of a necklace 42.

In yet another embodiment, the mouse cord 35 includes a second processor connector end (not shown) on the end of the mouse cord 35 distal from the processor connector end 50. In that case, the second processor connector end operably inserts into a second receptor port (not shown) formed in the housing portion 21 of the mouse 20 so that the mouse cord 35 is completely detachable from the secure portable mouse memory device 10.

In yet another embodiment, a receiving groove (not shown) on a surface of the secure portable mouse memory device 10 is operable to receive and securely hold the processor unit 70, such as, for example, an MP3 player.

A user of the secure portable mouse memory device 10 can carry the mouse 20 and the mouse cord 35 around their neck when the secure portable mouse memory device 10 is in the necklace form 42. Since the memory 60 is encased in the housing portion 21, the user easily travels with both a memory device and a mouse device combined in the secure portable mouse memory device 10 encircling their neck in the form of a necklace 42. In this manner, the secure portable mouse memory device 10 is not damaged or misplaced.

FIG. 4 is a top cross-sectional view of a secure portable mouse memory device 11 in communication with a processor unit 70 in accordance with a second embodiment of the invention. In this second embodiment, the mouse 24 differs from the mouse 20 of the first embodiment by the inclusion of a wireless chip 62. The wireless chip 62 is in electrical communication with the memory 60. The wireless chip 62 is enclosed in the housing portion 25 and a compatible wireless chip 72 is enclosed in the processor unit 70.

In this configuration, when the secure portable mouse memory device I 1 is triggered to transmit data from the memory 60 to the processor unit 70, the encryption processor 170 prompts the user of the processor unit 70 via a wireless signal for an locking code. The user enters the unlock code that is transmitted from the processor unit 70 to the memory 60 in the secure portable mouse memory device 10 via a wireless signal. The encryption processor 170 in the secure portable mouse memory device 11 compares the received locking code to the encryption key 67 in the memory 60. If the encryption processor 170 determines a match, the encryption processor 170 unlocks the memory 60 so the memory 60 is operable to communicate with the processor unit 70 via a wireless signal. The some or all of the data in memory 60 can be downloaded to the encryption processor 170. If the encryption processor 170 does not determine a match between the encryption key 67, the user entered an unlock code and the memory 60 remains locked. In this case, the memory 60 is not in communication to the processor unit 170 and no data is downloaded from the memory 60 to the encryption processor 170.

The wireless chip 62 in mouse 24 is operable to transmit data over a wireless connection from the memory 60 to the wireless chip 72 in the processor unit 70. Additionally, the wireless chip 72 in the processor unit 70 is operable to transmit data stored in the processor unit 70 to the wireless chip 62 in mouse 24 over a wireless connection. The necklace 42 is formed when the process connector end 50 is attached to the receptor port 58 of the mouse 24.

In this embodiment, the user can transfer data wirelessly to and from the secure portable mouse memory device 11. For example, the user can hang the secure portable mouse memory device 111 around their neck and type on the keyboard of a computer while the data in the memory 60 in the secure portable mouse memory device 11 is wirelessly transferred to the computer.

In another embodiment, a clip (not shown) located on the housing portion 25 attaches to an article of clothing worn by the user and the mouse memory device does not include a mouse cord 35 or processor connector end 50. In this case, the user clip the secure portable mouse memory device 11 to their shirt and type on the keyboard of a computer while the data in the memory 60 in the secure portable mouse memory device 11 is wirelessly transferred to the computer.

In yet another embodiment, a clip (not shown) located on the housing portion 25 attaches to an article of clothing worn by the user when the mouse memory device 11 is formed as a necklace 42. In yet another embodiment, a key-chain ring (not shown) located on the housing portion 25 attaches to a key chain of the user when the mouse memory device 11 is formed as a necklace 42. In one embodiment, the wireless chip 62 and the wireless chip 72 are short-range wireless chips compatible with the Wi-Fi technology as known in the art. In another embodiment, the wireless chip 62 and the wireless chip 72 are short-range wireless chips compatible with the Bluetooth technology as known in the art. In yet another embodiment, wireless chips for more than one wireless technology are enclosed in the housing portion 25. In yet another embodiment, a processor chip (not shown) within the housing portion 25 is intermediate to the memory 60 and the wireless chip 62. In yet another embodiment, the wireless chip 62 includes the encryption processor 170.

In yet another embodiment, secure portable mouse memory device 11 is operable to transmit data from the memory 60 to the processor unit 70 both electrically, via the mouse cord 35, and wirelessly. In this case, if the secure portable mouse memory device 11 is communicating with a processor unit 70 that does not include a wireless chip 72, then the mouse cord 35 is attached to the processor unit 70 as described above with reference to FIGS. 1-2.

Other fixing attachments to form necklace 42 are possible as described above with reference to FIG. 3, including one or more of a hasp, mating snaps, mating clips, mating grooves, mating Velcro®, and compatible sticky tape on the secure portable mouse memory device 11 and the processor connector end 50.

In one embodiment, the mouse cord 35 includes a second processor connector end (not shown) on the end of the mouse cord 35 distal from the processor connector end 50. In that case, the second processor connector end operably inserts into a second receptor port (not shown) formed in the housing portion 25 of the mouse 21. In this case, the mouse cord 35 is completely detachable from the secure portable mouse memory device 11.

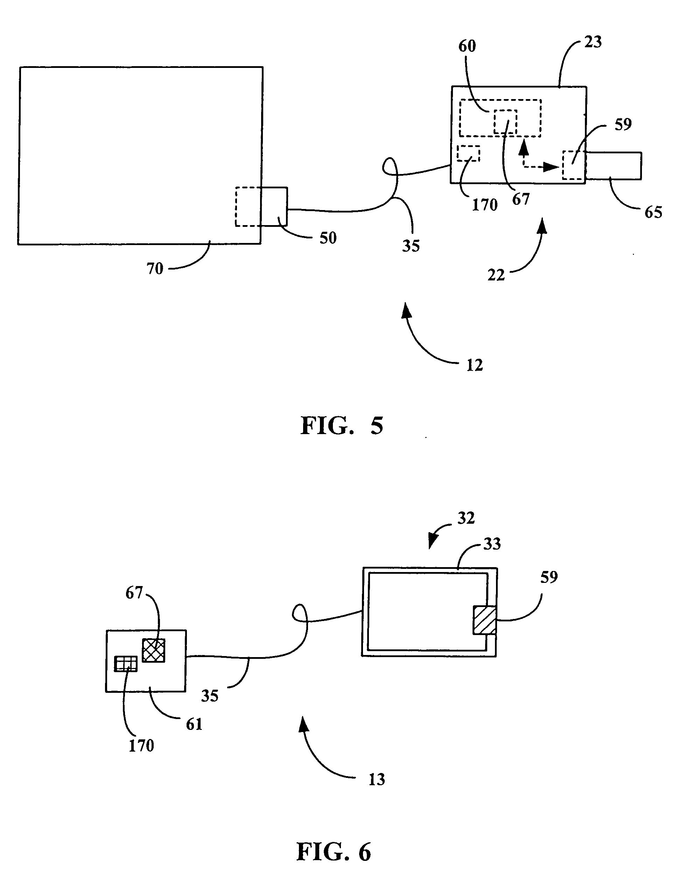

FIG. 5 is a top view of the secure portable mouse memory device 12 in communication with a processor unit 70 in accordance with a third embodiment of the invention. In this third embodiment, the mouse 22 differs from the mouse 20 of the first embodiment in that the receptor port 59 is additionally operable to receive an insertable memory device 65. An electrical connection between the receptor port 59 and the memory 60 is operable to transmit the data stored in the memory device 65 to the memory 60. In this manner, the memory 60 is updated from a removable memory device 65 inserted into a memory port 59 formed in the housing portion 23 of the mouse 22. In this embodiment, the encryption processor 170 functions as described above with reference to FIG. 2.

In one embodiment, the encryption processor 170 prompts the memory device 65 for a locking code when the memory device 65 is inserted into the receptor port 59. The memory device 65 transmits the locking code to the encryption processor 170. The encryption processor 170 in the secure portable mouse memory device 12 compares received locking code to the encryption key 67 in the memory 60. If the encryption processor 170 determines a match, the encryption processor 170 unlocks the memory device 65 so the memory device 65 is operable to transmit the data stored in the memory device 65 to the memory 60 via the electrical connection between the receptor port 59 and the memory 60. If the encryption processor 170 does not determine a match between the encryption key 67 and the received locking code, the memory device 65 remains in lock mode.

In yet another embodiment, the encryption processor 170 prompts the memory device 65 for a locking code when the memory device 65 is inserted into the receptor port 59. The memory device 65 transmits the locking code to the encryption processor 170. The encryption processor 170 in the secure portable mouse memory device 12 compares received locking code to the encryption key 67 in the memory 60. If the encryption processor 170 determines a match, the encryption processor 170 unlocks the memory device 65 so the memory device 65 is operable to communicate with the processor unit 70 via the mouse cord 35 and conductive trace lines (not shown) within the housing portion 23.

In yet another embodiment when the encryption processor 170 determines a match, the memory device 65 is operable to download data to both the processor unit 70 via the mouse cord 35 and to the memory 60 via the electrical connection between the receptor port 59.

In one embodiment, the memory device 65 is a jump drive, such as the Lexar Jump Drive Secure USB Solid State Drive, Kingston Data Traveler 2.0 Hi-Speed Flash memory, and Sony Micro Vault. In another embodiment, the memory device 65 is a memory stick, such as, Memory Stick ® Pro Cards, Lexar Media Memory Stick, and Sony MSX-M256S Memory Stick. In another embodiment, the receptor port 59 is a docking port for a personal digital assistant or a cellular phone and the memory device 65 is the respective personal digital assistant or cellular phone. In this manner, the data from the personal digital assistant or a cellular phone can be downloaded to the memory 60.

FIG. 6 is a top cross-sectional view of a secure portable mouse memory device 13 in accordance with a fourth embodiment of the invention. In this fourth embodiment, the secure portable mouse memory device 13 differs from the secure portable mouse memory device 10 in that the processor connector end 50 is replaced by a memory device 61, the memory 60 is not in the housing portion 33 of mouse 32, and the receptor port 59 is operable to receive an insertable memory device 61. As shown in FIG. 6, the encryption processor 170 and the encryption key 67 are located in the memory device 61 and the encryption processor 170 prompts the user of the processor unit 70 for a locking code when the memory device 61 is inserted into a processor receptor port 71 of processor unit 70. In another embodiment, the encryption processor 170 and the encryption key 67 are located in the housing portion 33 of mouse 32 and the encryption processor 170 prompts the user of the processor unit 70 via the mouse cord 35 for a locking code when the memory device 61 is inserted into a processor receptor port 71 of processor unit 70.

When the memory device 61 is inserted into the receptor port 59, a user of the secure portable mouse memory device 13 can drape the mouse cord 35 around their neck to easily and safely carry the mouse 32 and the memory device 61.

In one embodiment, the memory device 61 clips into a receiving clip on a surface of the secure portable mouse memory device 13 to fixedly attach the secure portable mouse memory device 13 in the form of a necklace 42. Other fixing attachments are possible including one or more of a hasp mating snaps, mating Velcro®, a groove to receive the memory device, and compatible sticky tape on the secure portable mouse memory device 10 and the memory device 61, and combinations thereof. In yet another embodiment, the end of the mouse cord 35 proximal the memory device 61 fits into a clip, a hasp or a groove in the secure portable mouse memory device 13 to form the secure portable mouse memory device 13 in the form of a necklace 42.

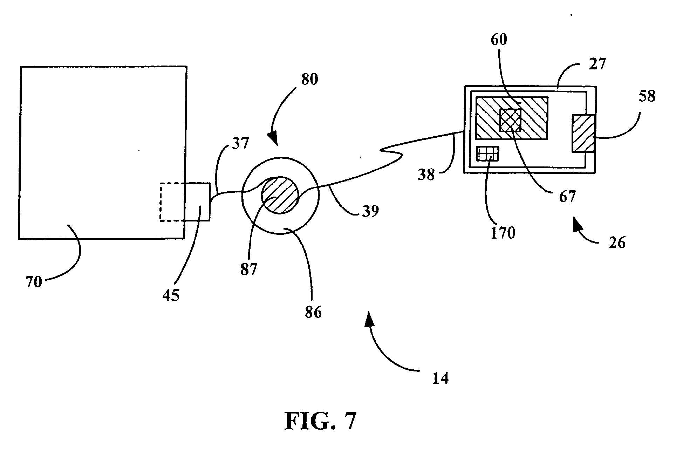

In FIGS. 7-18, the extendable and retractable cord 39 includes a spooling device having a spooling mechanism operable to wrap an extendable and retractable cord around the spool in a retracted position or to unwrap the extendable and retractable cord from the spool in an extended position. In the description related to FIGS. 7-18, several well-known features of spooling mechanisms and locking mechanisms for spools are not shown or described so as not to obscure the present invention. In the embodiments of the present invention represented by FIGS. 7-18, the function of secure transmission from the memory to the processor unit is provided by the encryption processor 170 and the encryption key 67 as is understandable from the description provided above with reference to FIGS. 2, 4, 5 and 6.

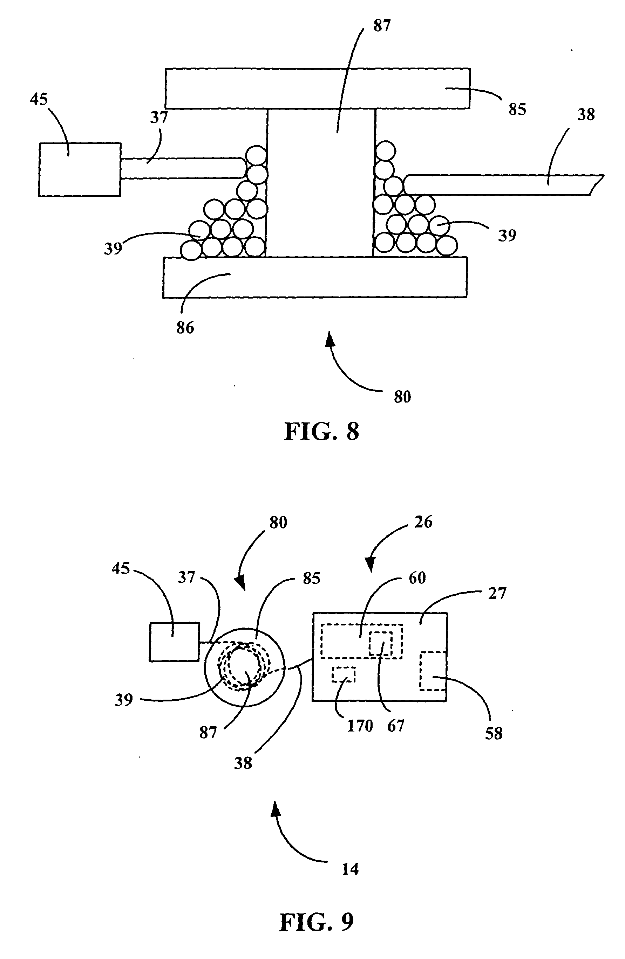

FIG. 7 is a top cross-sectional view of the secure portable mouse memory device 14 in communication with a processor unit 70, in accordance with a fifth embodiment of the invention. In this embodiment, the extendable and retractable cord 39 includes a spooling device 80 that is operable to retract and extend the cord. FIG. 8 is an enlarged side cross-sectional view of the spooling device 80 in the retracted position. The extendable and retractable cord 39 is wrapped around the central spool portion 87 and is held around the central spool portion 87 by the top spool portion 85 and the bottom spool portion 86. The central spool portion 87 contains the spooling mechanism (not shown).

The extendable and retractable cord 39 includes the two ends; a mouse-end 38 and a connector-end 37. The spooling device 80 is operably attached to the mouse 26 at the mouse-end 38 of the extendable and retractable cord 39. The spooling device 80 is operably attached to the processor connector end 45 at the connector-end 37 of extendable and retractable cord 39. The extendable and retractable cord 39 includes at least one electrical conductor extending continuously from the mouse-end 38 to the connector-end 37 to provide electrical communication between the memory 60 in the mouse 26 and the processor unit 70. The extendable and retractable cord 39 is additionally operable to transmit the cursor signals from the mouse to the processor unit 70.

In one embodiment, the spooling device includes a locking mechanism to hold the spool in the extended or retracted position. In this case, the extendable and retractable cord can be locked into position at any chosen length up to the longest extension of the cord.

The encryption processor 170 is operable to communicate with the processor unit 70 via the extendable and retractable cord 39 to determine a match between the received locking code and the encryption key 67 in the memory 60.

FIG. 9 is a top view of the secure portable mouse memory device 14 in accordance with the fifth embodiment of the invention. The spooling device 80 is in the retracted position. The extendable and retractable cord 39 is wrapped around the center spool portion 87 with only the mouse-end 38 and the connector-end 37 of extendable and retractable cord 39 extending beyond the top spool portion 85. Broken lines 39 represent the extendable and retractable cord 39 projected onto the top of the top spool portion 85.

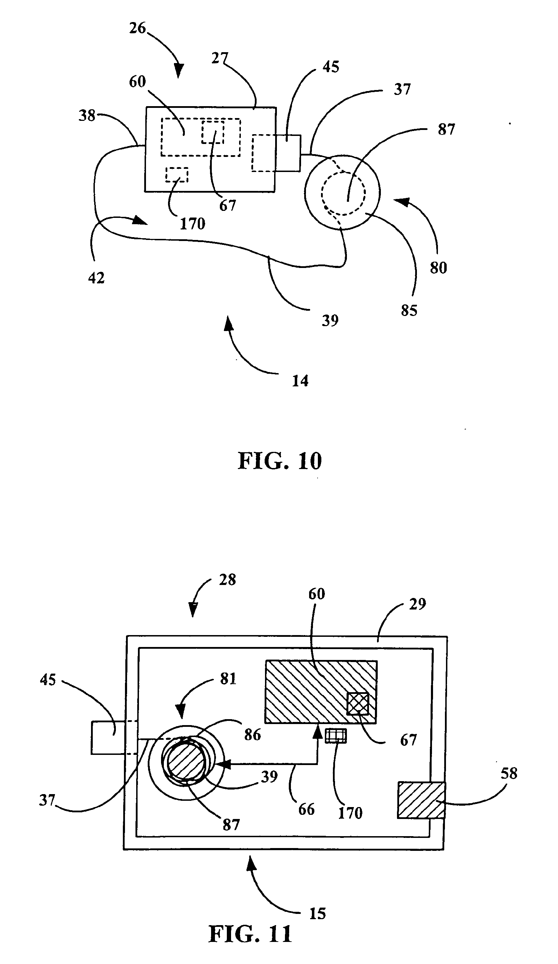

FIG. 10 is a top view of the secure portable mouse memory device 14 formed as a necklace 42 in accordance with the fifth embodiment of the invention. The extendable and retractable cord 39 has a length to allow the secure portable mouse memory device 14 to form a necklace 42 when the spooling device 85 is in the extended position and the processor connector end 45 is attached to the receptor port 58. In this manner, the user of the secure portable mouse memory device 14 carries the mouse 26, the spooling device 80 and the mouse cord 36 around their neck as necklace 42.

In one embodiment, the user extends and locks into position a length of the extendable and retractable cord 39 from the spooling device 80 so that the extended length forms a loop having a diameter which holds the secure portable mouse memory device 14 around the wrist, upper arm, waist or leg of the user. In another embodiment, the user extends and locks into position a length of the extendable and retractable cord 39 from the spooling device 80 so that the extended length forms a loop having a diameter which loosely secures the secure portable mouse memory device 14 around the wrist, waist or ankle of the user as desired.

In yet another embodiment, the processor connector end 45 clips into a receiving clip (not shown) on a surface of the secure portable mouse memory device 14 to fixedly attach the secure portable mouse memory device 14 in the form of a necklace 42. Other fixing attachments are possible including one or more of a hasp, mating snaps, mating Velcro®, and compatible sticky tape on the secure portable mouse memory device 14 and the processor connector end 45. In yet another embodiment, a clip (not shown) located on the housing portion 27 attaches to an article of clothing worn by the user when the mouse memory device 14 is formed as a necklace 42. In yet another embodiment, a key-chain ring (not shown) located on the housing portion 27 attaches to a key chain of the user when the mouse memory device 14 is formed as a necklace 42.

FIG. 11 is a top cross-sectional view of the secure portable mouse memory device 15 in accordance with a sixth embodiment of the invention. In secure portable mouse memory device 15, the spooling device 81 is located within a housing portion 29 of the mouse 28 unlike spooling device 80, which was located outside the mouse 26 (FIG. 9). The processor connector end 45 of the extendable and retractable cord 39 is partially external to the housing portion 29 when the secure portable mouse memory device 15 is in the retracted position. In this manner, the user can pull the processor connector end 45 of the extendable and retractable cord 39 to extend it. In this embodiment, the mouse-end 38 is a conductor, shown as double arrow 66, to electrically connect the extendable and retractable cord 39 to the memory 60.

As described above with reference to FIG. 10, the extendable and retractable cord 39 has a length to allow the secure portable mouse memory device 15 to form a necklace 42 when the spooling device 81 is in the extended position and the processor connector end 45 is attached to the receptor port 58. In one embodiment, the user can retract the extendable and retractable cord 39 into the spooling device 80 and carry the mouse 28 in a purse, a pocket, or a briefcase. Since the memory and the cord are enclosed in the housing portion 29, the extendable and retractable cord 39 does not become entwined with other items in the purse, the pocket, or the briefcase. In this case, the user only needs to travel with one item in the purse, pocket or briefcase to have access to an operational memory and mouse.

In one embodiment, the secure portable mouse memory device 15 is operable to transmit data from the memory 60 to the processor unit 70 electrically, via the extendable and retractable cord 39. In another embodiment, the mouse 28 includes a wireless chip (not shown) and communicates with the processor unit 70 wirelessly and the extendable and retractable cord 39 functions only as a necklace 42. In yet another embodiment, the secure portable mouse memory device 15 is operable to transmit data from the memory 60 to the processor unit 70 both electrically via the extendable and retractable cord 39 and wirelessly.

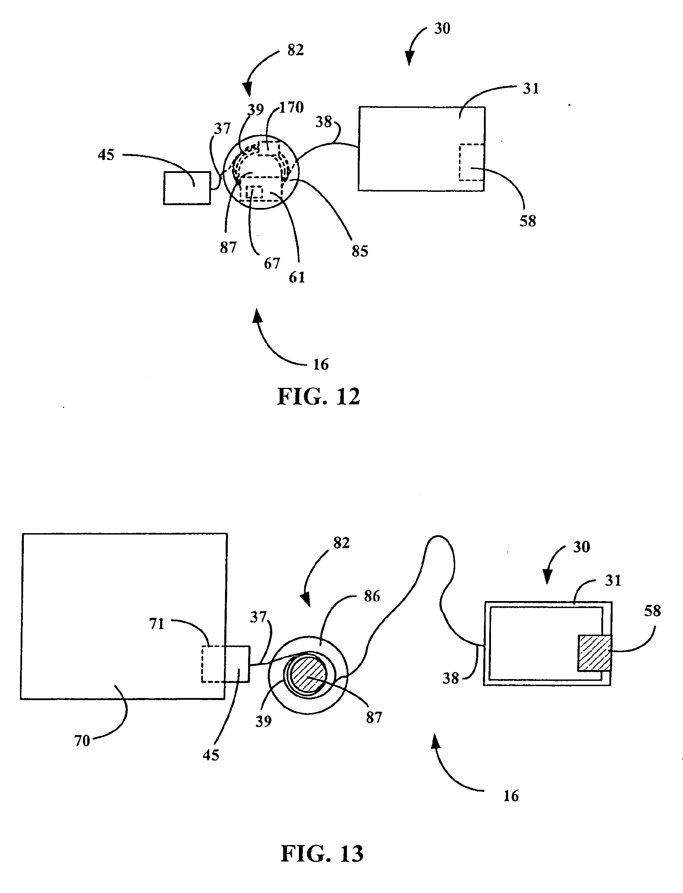

FIG. 12 is a top view of a secure portable mouse memory device 16 in accordance with a seventh embodiment of the invention. In this embodiment, secure portable mouse memory device 16 differs from the secure portable mouse memory devices 14 and 15 in that the memory 61, the encryption processor 170, and the encryption key 67 are located in the spooling device 82 rather than in the mouse 30. Broken lines 61, 67, 170 represent the memory 61, and the encryption processor 170 projected onto the top of the top spool portion 85. The encryption processor 170 is operable to communicate with the processor unit 70 via the extendable and retractable cord 39 to determine a match between locking code and the encryption key 67 in the memory 61.

The secure portable mouse memory device 16 is in a necklace form when the processor connector end 45 is inserted into the receptor port 58. In one embodiment, the encryption processor 170 is part of the memory 61. In yet another embodiment, encryption key 67 is stored in the encryption processor 170.

FIG. 13 is a top cross-sectional view of the secure portable mouse memory device 16 in communication with a processor unit 70 in accordance with the seventh embodiment of the invention. The memory 61 (FIG. 12) located in the spooling device 82 is in electrical connection with the processor unit 70 when the processor connector end 45 at a connector-end 37 of extendable and retractable cord 39 is inserted into the processor receptor port 71. The electrical connection is operable to transmit data from the memory 61 (FIG. 12) to the processor unit 70.

If the cursor controller in the processor unit 70 receives signals from the mouse 30 that are not wireless signals, the extendable and retractable cord 39 is conductive between the mouse-end 38 and the connector-end 37 to allow electrical communication between the mouse 26 and the processor unit 70.

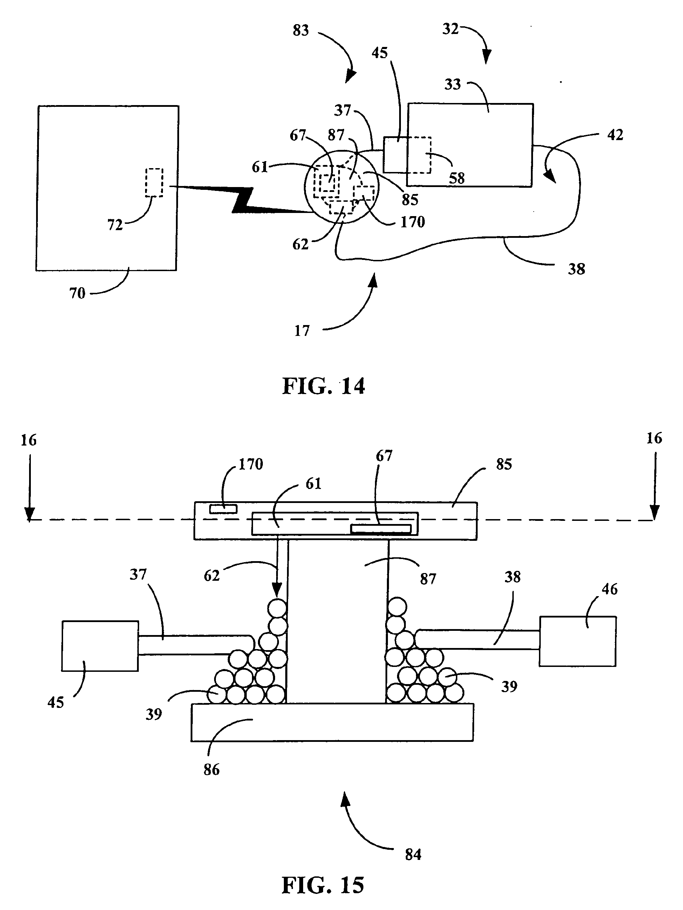

FIG. 14 is a top view of the secure portable mouse memory device 17 in communication with a processor unit 70 in accordance with an eighth embodiment of the invention. In secure portable mouse memory device 17, the spooling device 83 differs from spooling device 82 of the secure portable mouse memory device 16 (FIGS. 12-13) by the inclusion of a wireless chip 62. Broken lines 61, 62, 67 and 170 represent the memory 61, the wireless chip 62, encryption key 67 and encryption processor 170 projected onto the top of the top spool portion 85. Broken line 72 represents the wireless chip 72 projected onto the top of the processor unit 70. The wireless chip 62 is in electrical communication (not shown) with the memory 61. The wireless chip 62 is enclosed in the top spool portion 85 and a wireless chip 72 is enclosed in the processor unit 70.

The secure portable mouse memory device 17 is in the form of a necklace 42 when the processor connector end 45 is inserted into the receptor port 58. In one embodiment, the memory 61 and the wireless chip 62 are enclosed in the bottom spool portion 86. In another embodiment, the memory 61 and the wireless chip 62 are enclosed in the central spool portion 87.

In yet another embodiment, the secure portable mouse memory device 17 functions as a completely wireless mouse device in which the mouser cursor control is wirelessly transmitted from the mouse 32 to the processor unit 70, as known in the art. In yet another embodiment, the mouser cursor control is electrically transmitted from the mouse 32 to the processor unit 70 and only the memory data is transmitted wirelessly to the processor unit 70.

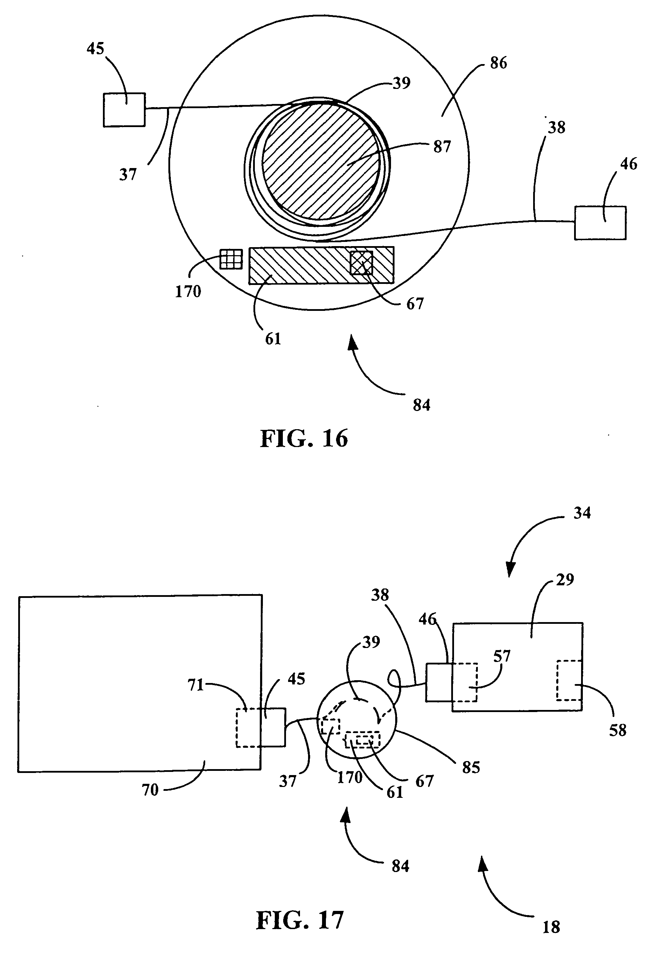

FIG. 15 is an enlarged side cross-sectional view of the spooling device 84 in accordance with a ninth embodiment of the invention. FIG. 16 is a top cross-sectional view of the spooling device 84 in accordance with the ninth embodiment of the invention. The plane upon which the cross-section view of FIG. 16 is taken is indicated by section line 16-16 in FIG. 15. The spooling device 84 differs from the spooling device 82 (FIGS. 12 and 13) by the addition of the mouse connector end 46 at the mouse-end 38 of extendable and retractable cord 39. In this manner, the spooling device is removably attached to the mouse. In FIGS. 15 and 16, the spooling device 84 is in the retracted position and the extendable and retractable cord 39 is wrapped around the central spool portion 87 and overlies the bottom spool portion 86.

The electrical connection between the memory 61 and the extendable and retractable cord 39 is indicated as arrow 62 (FIG 15). In one embodiment, the electrical connection between the memory 61 and extendable and retractable cord 39 is a trace line internal to the central spool portion 87. In another embodiment, the electrical connection between the memory 61 and the extendable and retractable cord 39 is a trace line on the external surface of the central spool portion 87. In yet another embodiment, the electrical connection between the memory 61 and the extendable and retractable cord 39 is a conductive external surface of the central spool portion 87. In yet another embodiment, the extendable and retractable cord 39 is inserted into the top spool portion 85 to electrically contact the memory 61. The central spool portion 87 contains the spooling mechanism (not shown).

FIG. 17 is a top view of the secure portable mouse memory device 18 in communication with a processor unit 70 in accordance with the ninth embodiment of the invention. The secure portable mouse memory device 18 includes the mouse 34 and the spooling device 84 in communication with the processor unit 70 via extendable and retractable cord 39. The mouse 34 includes a mouse receptor port 57 and a mouse receptor port 58. The mouse receptor port 57 and a mouse receptor port 58 are formed in the housing portion 29 of the mouse 34. The processor connector end 45 of the extendable and retractable cord 39 is inserted into the processor receptor port 71 and the mouse connector end 46 is inserted into the mouse receptor port 57 for the memory to be operable to communicate with the processor unit 70. The memory 61 is operable to communicate with the processor unit 70 via the extendable and retractable cord 39 between the spooling device 84 and the processor unit 71. Cursor signals from the mouse 34 are communicated to the processor unit 70 via the whole length of the contiguous electrical conductor of extendable and retractable cord 39 between the mouse 34 and the processor unit 71.

The processor connector end 45 is inserted into the mouse receptor port 58 and the mouse connector end 46 is inserted into the mouse receptor port 57 for the secure portable mouse memory device 18 to form a necklace.

In one embodiment, a wireless chip is in the spooling device 84 in secure portable mouse memory device 18 to provide wireless communication with the processor unit 70. In another embodiment, a wireless chip is in the mouse 34 and secure portable mouse memory device 18 is in wireless communication with the processor unit 70. In both these embodiments, the encryption processor 170 is operable to communicate with the processor unit 70 via a wireless signal to determine a match between the received locking code and the encryption key 67 in the memory 61 and, in both these embodiments, the extendable and retractable cord 39 only functions to form a necklace.

In another embodiment, the memory 61 is not in the spooling device 84. In this case, memory 61 is in the housing portion 29 of mouse 34 and is operable to communicate with the processing unit 70 when the processor connector end 45 is inserted into the processor receptor port 71 and the mouse connector end 46 is inserted into the mouse receptor port 57.

In yet another embodiment, the processor connector end 46 clips into a first receiving clip (not shown) on a surface of the secure portable mouse memory device 18 and the processor connector end 45 clips into a second receiving clip (not shown) on a surface of the secure portable mouse memory device 18 to fixedly attach the secure portable mouse memory device 18 in the form of a necklace 42. Other fixing attachments are possible including one or more of a hasp, mating snaps, mating Velcro®, and compatible sticky tape on the secure portable mouse memory device 18 and the processor connector ends 45 and 46.

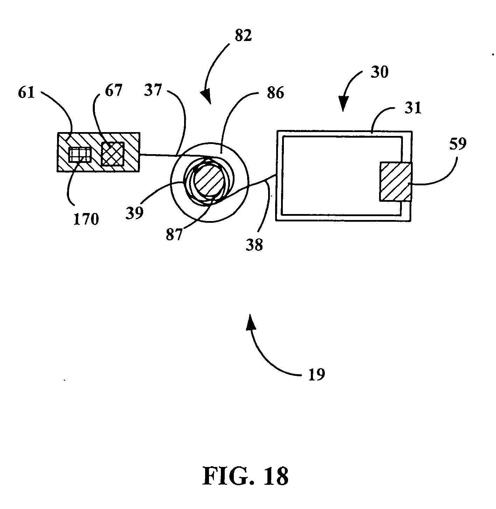

FIG. 18 is a top cross-sectional view of the secure portable mouse memory device 18 in accordance with a tenth embodiment of the invention. In this tenth embodiment, the secure portable mouse memory device 19 differs from the secure portable mouse memory device 14 (FIG. 9) in that the memory 60 is not in the housing portion 31 of the mouse 30, but is a memory device 61 at the connector-end 37 of the extendable and retractable cord 39, and the receptor port 59 is operable to receive the insertable memory device 61. In secure portable mouse memory device 19, the encryption processor 170 is in the memory 61 and is operable to communicate with the processor unit 70 via conductive trace lines (not shown) to determine a match between the received locking code to the encryption key 67 in the memory 61. When the memory device 61 is inserted in to the receptor port 59, a user of the secure portable mouse memory device 13 can drape the extendable and retractable cord 39 around their neck to easily and safely carry the mouse 30 and the memory device 61.

The exemplary secure portable mouse memory devices illustrated are all operable to establish a connection for communication between a memory 60 or 61 and a processor unit 71, in which the memory is in the mouse 20, 24, or 26 or in a spooling device 80, 81, 83 or 84 attached to or attachable to respective mice 26, 28, 30 or 34. The secure portable mouse memory devices are all operable to form a necklace in order to hang the secure portable mouse memory devices around the neck of a user for simple transportation of the secure portable mouse memory device.

The secure portable mouse memory devices provide a way for a user to have a portable office, in which the user downloads data from one of the secure portable mouse memory devices onto an available computer at any location. The user then operates the cursor in the connected computer with the secure portable mouse memory devices. In an exemplary case, a sales person, who travels to several remote offices, can share a computer at the remote office with other sales people who also travel to that location. The sales person does not need to carry a laptop and a mouse, but instead wears the secure portable mouse memory device as a necklace while traveling for use with computers at any location.

The embodiments described are combinable to form additional embodiments not specifically described herein.

While the embodiments of the invention disclosed herein are presently considered to be preferred, various changes and modifications can be made without departing from the scope of the invention. The scope of the invention is indicated in the appended claims and all changes that come within the meaning and range of equivalents are intended to be embraced therein.

## Claims

1. A secure portable mouse memory device for use with a processor unit comprising:
a mouse having an encryption processor in communication with the processor unit;
a memory having an unlock mode in which the memory is operable to communicate with the processor unit and having a lock mode in which the memory is not operable to communicate with the processor unit; and
an encryption key wherein the encryption processor locks the memory in unlock mode when the encryption processor matches a received locking code with the encryption key.

2. The device of claim 1, wherein the mouse is operable to transmit data between the memory in the unlock mode and the processor unit over a wireless connection.

3. The device of claim 1, wherein the mouse has a mouse cord, the mouse cord having a processor connector end, the mouse also having a receptor port to receive the processor connector end.

4. The device of claim 3, wherein the processor connector end is adapted to connect to the processor unit selected from the group consisting of a computer, a portable communication device, a laptop computer, a personal digital assistant, a cell phone, a music player, a digital camera device, a video recording device, and combinations thereof.

5. The device of claim 3, wherein the processor connector end includes a memory device, the memory device being insertable in the receptor port.

6. The device of claim 1, wherein the encryption key is a biometric identifier and the mouse further includes a biometric sensor.

7. The device of claim 1, wherein the mouse has a memory port, and the memory is a removable memory device insertable into the memory port.

8. The device of claim 1, wherein the mouse has a memory port, and the memory is updatable from a removable memory device inserted into the memory port when the memory is in the unlock mode.

9. The device of claim 1, further comprising:
a spooling device operable to retract and extend a mouse cord, the spooling device being operably attached to the mouse.

10. The device of claim 9, wherein:
the mouse has a housing portion and the spooling device is located within the housing portion, and
the processor connector end is partially external to the housing portion.

11. The device of claim 9, wherein the memory is located within the spooling device.

12. A secure portable mouse memory system for use with a processor unit comprising:
a mouse having a housing portion;
an encryption processor located in the housing portion, the encryption processor in communication with the processor unit and operable to receive a locking code from a user of the processor unit;
a memory operable to interface with the encryption processor located in the housing portion, the memory having a locking mode; and
an encryption key stored in the housing portion, wherein the encryption processor sets the locking mode of the memory in an unlock mode when the encryption processor matches a received locking code with the encryption key.

13. The system of claim 12, wherein the locking mode of the memory includes a lock mode and an unlock mode, wherein the memory is operable to communicate with the processor unit in the unlock mode, and wherein the memory is not operable to communicate with the processor unit in the lock mode.

14. The system of claim 12, wherein the mouse comprises a mouse cord having a processor connector end, the mouse also having a receptor port to receive the processor connector end.

15. The system of claim 14, wherein the mouse has a housing portion and the receptor port is formed in the housing portion.

16. The system of claim 15, wherein the cord has a length to allow the device to form a necklace when the processor connector end is attached to the receptor port.

17. The system of claim 12, wherein the mouse is operable to transmit data between the memory and the processor unit over a wireless connection.

18. A secure portable mouse memory system comprising:
means for determining a match between an encryption key and a received locking code;
means for setting a locking mode for a memory in a mouse;
means for establishing a connection between the mouse and a processor unit; and
means for transmitting data between the memory and a processor unit based on the setting of the locking mode.

19. The system of claim 18, further comprising:
means for attaching the mouse to a user when the connection is not established.

20. The system of claim 19, further comprising:
means for retracting the establishing means.
